# EUROPEAN PATENT APPLICATION

(11) **EP 1 560 423 A1**
(43) Date of publication of application: **03.08.2005**
(21) Application number: 05290191.5
(22) Date of filing: 28.01.2005
(51) Int. Cl.: H04N 5/225, G03B 17/14, G02B 7/04, G02B 7/14

(54) **Lens module and camera**

(30) Priority: 28.01.2004 JP 2004019906
(71) Applicant: FTC Corporation, Kawasaki-shi, Kanagawa-ken (JP)
(72) Inventor: Nishimura, Takashi, Kawasaki-shi Kanagawa-ken (JP); Nagaoka, Shinji, Yotsukaido-shi Chiba-ken (JP)
(74) Representative: Le Forestier, Eric

(57) **Abstract**

A lens module has a plurality of lens units (6,9) which have focal lengths different from each other; an imaging device which focuses a subject light passing through one lens unit selected from the plurality of lens units on a common imaging plane to conduct photoelectric conversion; and a lens base (2) which houses the plurality of lens units so that tip's faces of lenses at subject side in the plurality of lens units are flush, wherein switching of light paths in the plurality of lens units is conducted by moving the entire lens base.

## Description

### BACKGROUND OF THE INVENTION

### Field of the Invention

The present invention relates to a lens module and a camera capable of switching two focal length. Especially, the present invention relates a lens module and a camera capable of being embedded in thin type electronics devices such as a cellular phone or a digital camera.

### Related Art

Recently, a cellular phone and a thin type digital camera which embeds an imaging device having one or more million pixels. The cellular phone is required to be size and thinness capable of housing in pockets of clothes and bags. Since users prefer the cellular phone having big size display screen and good operationality, flip type cellular phones became widespread. The flip type cellular phones have more severe limitation against thickness of the imaging device, and the thickness thereof has to be only 10 mm or less at the maximum.

The imaging device has a lens and an image sensor such as a CCD (Charge Coupled Device) and a CMOS sensor. It is not easy to shorten a distance from the lens to the image sensor. The distance in a light axis direction is decided by a focal length of the lens and the thickness of the image sensor. If the focal length of the lens is shortened with respect to a size (about 1/3 - 1/2 inch) of the imaging phase of the image sensor, an image magnification becomes short too much. Therefore, ordinary users may not be able to take pictures they want (see article of http://www.zdnet.co.jp/mobile/0304/14).

As resolution of the image sensor becomes high, size of the Image sensor also becomes larger. The reason is that if only the resolution is raised without changing size of the image sensor, pixel size becomes small, the imaging data saturates easily, and image quality of the image deteriorates.

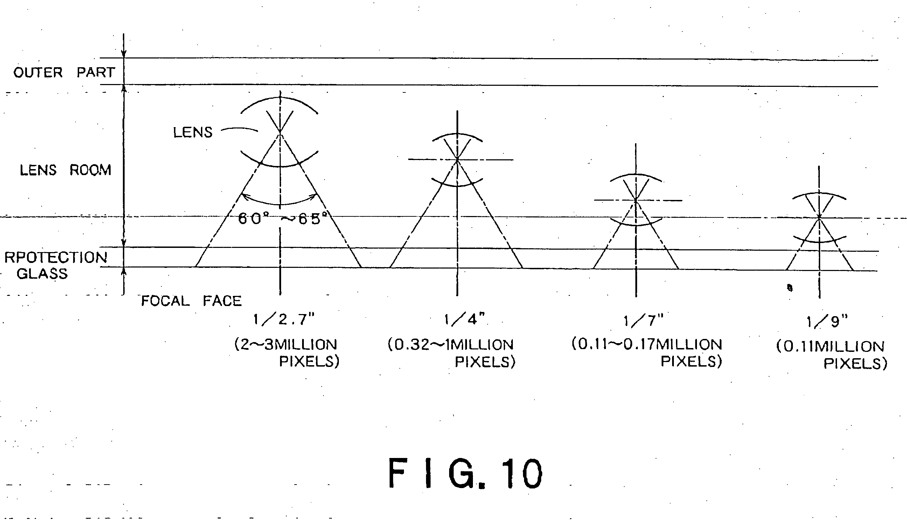

Fig. 10 is a diagram showing a relationship between a size of the image sensor and a field edge of the lens. As the resolution of the image sensor becomes high and a size of the imaging area also becomes large, the focal length becomes long. That is, when the image sensor of high resolution and large size is used, it is necessary to enlarge the distance between the image sensor and the lens.

The thickness of the image sensor includes the thickness of a protection glass and a package of a chip. Therefore, there is a physical limitation to reduce the thickness.

By the above-mentioned reasons, when the imaging device having more than one million pixels is used for the cellular phone, design of the cellular phone is limited by the thickness of the imaging device, and portability is also damaged. Moreover, if optical zoom lens is used for the cellular phone, it is necessary to change the focal length from wide-angle to telephoto angle. Therefore, the thickness of the cellular phone becomes further thick and downsizing becomes further difficult. By such a reason, there is no cellular phone which has the imaging device having one or more million pixels and full-fledged optical zoom function.

### SUMMARY OF THE INVENTION

In order to solve the above-described problem, an object of the present invention is to provide a lens module and a camera capable of switching focal lengths, downscaling a size and reducing a thickness.

A lens module according to one embodiment of the present invention, comprising:
a plurality of lens units which have focal lengths different from each other;
an imaging device which focuses a subject light passing through one lens unit selected from said plurality of lens units on a common imaging plane to conduct photoelectric conversion; and
a lens base which houses said plurality of lens units so that tip's faces of lenses at subject side in said plurality of lens units are disposed at the same position,
wherein switching of light paths in said plurality of lens units is conducted by moving the entire lens base.

### BRIEF DESCRIPTION OF THE DRAWINGS

Fig. 1 is a cross-section diagram of the lens module in the case of using the TELE lens to take images.
Fig. 2 is a cross-section diagram of the lens module in the case of using the WIDE lens to take images.
Fig. 3 is a plan view of the lens module according to the embodiment.
Fig. 4 is a cross-section diagram at line B-B' in Fig. 3.
Fig. 5 is a cross-section diagram at line C-C' in Fig. 3.
Fig. 6A is an appearance diagram as seen from the above, Fig. 6B is an appearance diagram as seen from the X direction, and Fig. 6C is an appearance diagram as seen from the Y direction.
Fig. 7 is a plan view when the WIDE actuator and the TELE actuator 34 are integrated.
Fig. 8 depicts one example of an individual shutter 13'.
Fig. 9 is a diagram for explaining one example of switching of the zoom amount.
Fig. 10 is a diagram showing a relationship between a size of the image sensor and a field edge of the lens.

### DETAILED DESCRIPTION OF THE INVENTION

Hereinafter, one embodiment of the present invention will be explained, with reference to the drawings.

### (First Embodiment)

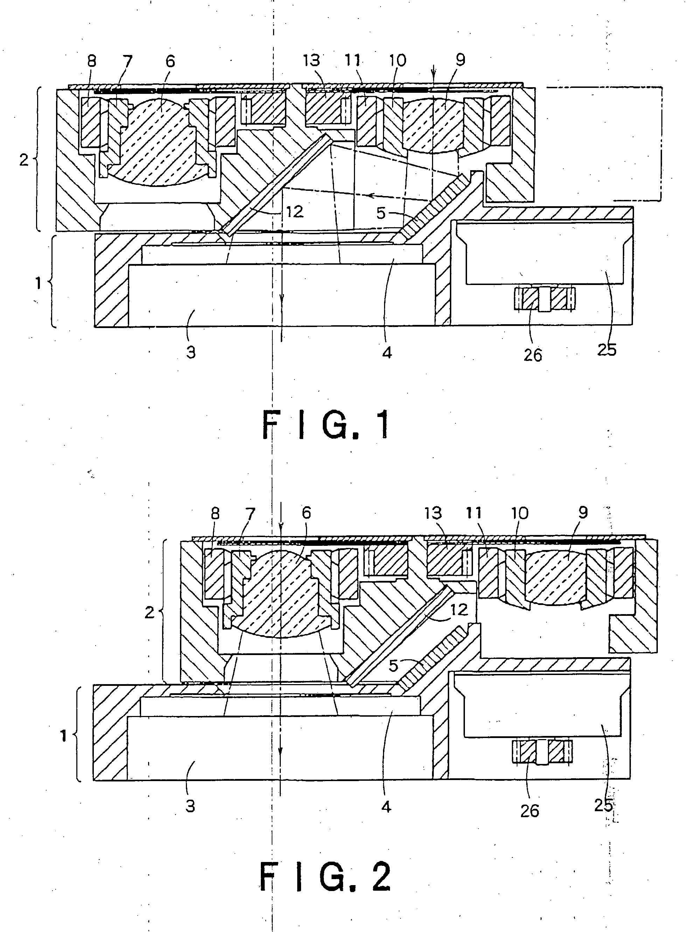

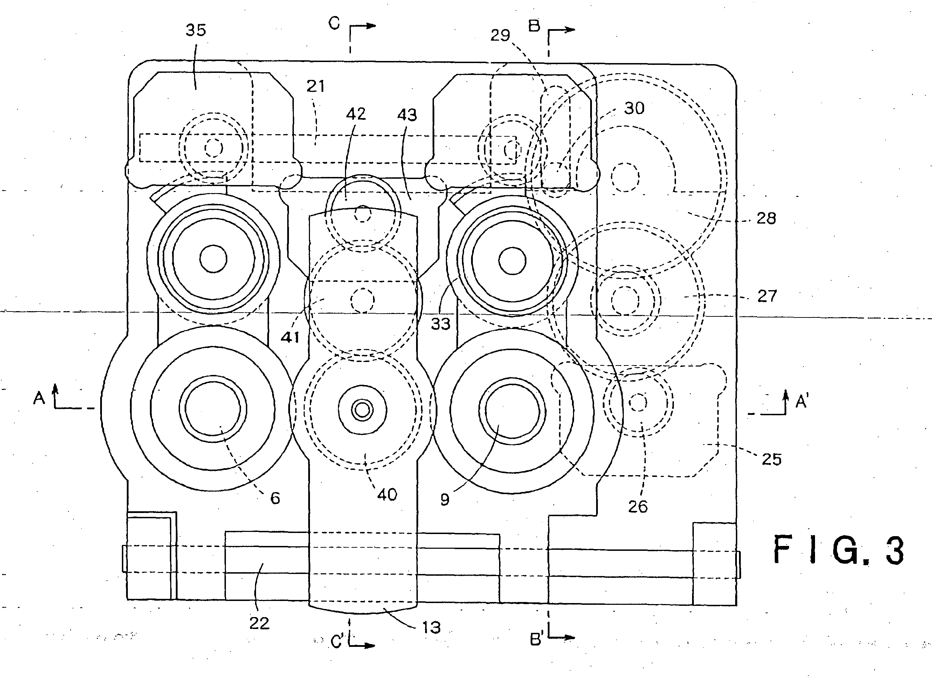

Figs. 1 and 2 are cross-section diagrams for explaining the outline of a lens module according to one embodiment of the present invention. The lens module according to this embodiment adopts a bifocal switching manner that can switch and use a wide-angle lens (hereinafter, "WIDE lens") and a telephoto lens (hereinafter, "TELE lens").

Fig. 1 is a cross-section diagram of the lens module in the case of using the TELE tens to take images. Fig. 2 is a cross-section diagram of the lens module in the case of using the WIDE lens to take images.

In both cases of Figs. 1 and 2, the installation position of an image sensor is the same, and an optical axis of light incident on the image sensor is common. That is, in the embodiment, the WIDE lens and the TELE lens use the same optical axis.

As shown in Figs. 1 and 2, the lens module according to this embodiment is largely divided into two, that is, a fixed sensor holder 1, and a lens base 2 movable according to the lens to be used. The lens base 2 is arranged on a subject side, and the sensor holder 1 is arranged on a photographer side.

The sensor holder 1 has an image sensor 3 formed of a CCD, a CMOS sensor or the like. The image sensor 3 is assumed to have a high resolution exceeding one million pixels, but there is no particular limitation on the resolution.

A protective glass 4 is attached on the upper surface of an imaging plane of the image sensor 3. A first mirror 5 is provided obliquely above the image sensor 3. The first mirror 5 is provided in the sensor holder 1, and is used only when the TELE lens is used. Since the sensor holder 1 is always fixed, the first mirror 5 does not move. However, the first mirror 5 may be provided on the lens base 2, and in this case, the first mirror 5 also moves.

The lens base 2 has a WIDE lens 6, a WIDE lens frame 7, a WIDE lens holder 8 for holding the WIDE lens frame 7, a TELE lens 9, a TELE lens frame 10, a TELE lens holder 11 for holding the TELE lens frame 10, a second mirror 12, and a shutter 13. The lens base 2 can move in a direction substantially parallel to the imaging plane of the image sensor 3. When the TELE lens 9 is used, the lens base 2 moves to the position shown in Fig. 1, and when the WIDE lens 6 is used, the lens base 2 moves to the position shown in Fig. 2.

When the TELE lens 9 is used, as shown in Fig. 1, subject light passing through the TELE lens 9 is reflected by the first mirror 5 and guided to the second mirror 12, and reflected by the second mirror 12 to enter into the image sensor 3.

On the other hand, when the WIDE lens 6 is used, as shown in Fig. 2, the subject light directly enters into the image sensor 3, without passing through the first mirror 5 and the second mirror 12. That is, the first mirror 5 and the second mirror 12 are used only at the time of using the WIDE lens 6.

Thus, in this embodiment, the optical length is changed according to whether the subject light is guided to the first or second mirror 5 or 12, thereby increasing the optical length at the time of using the TELE lens 9. By providing the first and the second mirrors 5 and 12, the optical path can be provider in a direction substantiate parallel to the imaging plane of the image sensor 3, thereby decreasing the length in the direction of the optical axis.

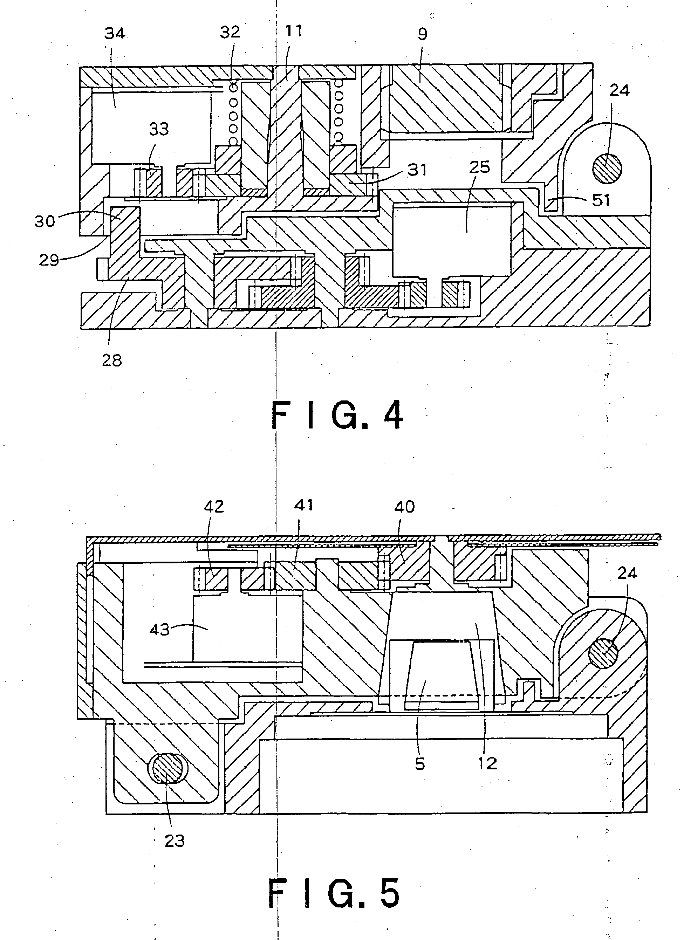

Fig. 3 is a plan view of the lens module according to the embodiment. Figs. 1 and 2 respectively show the cross-section diagram at line A-A' in Fig. 3. Fig. 4 is a cross-section diagram at line B-B' in Fig. 3, and Fig. 5 is a cross-section diagram at line C-C' in Fig. 3.

A shift mechanism of the lens base 2 will be explained first. The lens base 2 is, as shown In Fig. 3, can shift in the right and left direction in the figure, along guide rods 21 and 22. The guide rod 21 is inserted and fitted into a hole 23 formed at one end of the lens base 2. The guide rod 22 is inserted and fitted into a hole 24 formed at the other end of the lens base 2. The lens base 2 is suspended from the sensor holder 1, by the guide rods 21 and 22.

The shift of the lens base 2 is controlled by a switching mechanism and a switching actuator 25. The switching actuator 25 is actuated when a user operates a zoom button (not shown). The zoom button is not necessarily a dedicated one, and a mode setting button provided originally in a mobile phone or the like can be used.

The switching actuator 25 converts an electric signal due to the operation of the zoom button to a mechanical signal. That is, the switching actuator 25 rotates a reduction gear 27 via a switching actuator gear 26. Since the reduction gear 27 engages with a disc 28, the disc 28 also rotates. The disc 28 is formed with a drive pin 30, which engages with a cam groove 29. When the disc 28 rotates, the drive pin 30 also moves corresponding thereto, and the cam groove 29 moves In the right and left direction (in a direction of the imaging plane of the image sensor 3) in Fig. 3. As shown in Fig. 4, since the cam groove 29 is formed in a part of the lens base 2, the entire lens base 2 shifts in the right and left direction in Fig. 3 along the guide rods 21 and 22, that is, substantially parallel to the imaging plane of the image sensor 3, together with the movement of the drive pin 30.

As described in this embodiment, when the entire lens base 2 is shifted, since the movement of the lens base 2 is straight, as the weight of the lens base 2 increases, the noise and impact at the time of stopping becomes unignorable. In order to solve this problem without decreasing the switching speed, it is desired to control the movement of the lens base 2 at a switching speed such that the moving speed of the lens base 2 changes in a sine curve. At this time, if a speed reducer such as the reduction gear 27 is combined therewith, better noise reduction and impact-proofness can be achieved.

There are two conditions for determining the shift amount of the lens base, that is, one condition is that as the shift amount increases, the size of the entire lens module increases, and the other Is that when the shift amount is decreased, light leakage may occur from the WIDE lens 6 side at the time of using the TELE lens 9.

As a result of trial and error by the present inventor, it is found that the shift amount of the lens base is desirably larger than the length of the imaging plane, and within 1.5 times as large as the length thereof. This range can be considered to be a safety zone with respect to the light leakage from the WIDE lens 6.

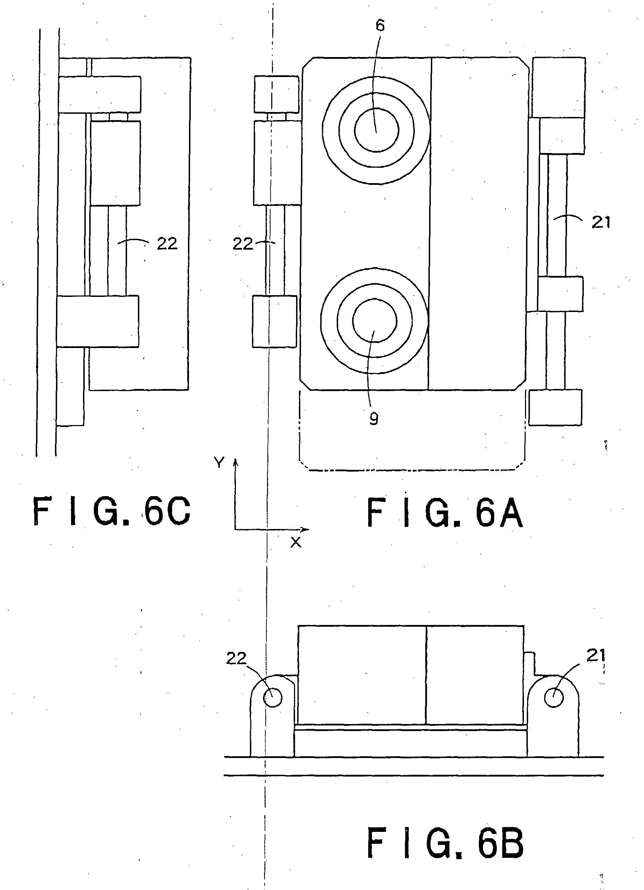

Fig. 6 is an appearance diagram of the lens module in another embodiment. Fig. 6A is an appearance diagram as seen from the above, Fig. 6B is an appearance diagram as seen from the X direction, and Fig. 6C is an appearance diagram as seen from the Y direction. The lens module shifts in the Y direction in Fig. 6. In the lens module in Fig. 6, the guide rods 21 and 22 are arranged outside of a housing of the lens module.

An automatic focusing mechanism of the WIDE lens 6 and the TELE lens 9 will be explained below. Fig. 4 shows a sectional structure on the TELE lens 9 side, wherein a disc-like face cam 31 is provided on the imaging plane side of the TELE lens holder 11. The TELE lens holder 11 is pressed against the face cam 31 by a pressure bar spring 32. The face cam 31 engages with the TELE actuator gear 33, and the TELE actuator gear 33 is rotated by a TELE actuator 34.

A difference in level is provided on a face of the face cam 31 to be contacted with the TELE lens holder 11. When the TELE actuator 34 rotates the TELE actuator gear 33, the face cam 31 also rotates, and the TELE lens holder 11 shifts in the direction of optical axis due to the difference in level in the face cam 31, thereby performing focus adjustment.

While a cross-section diagram of the WIDE lens 6 corresponding to Fig. 4 is omitted in this specification, the WIDE lens 6 has the same structure as that shown in Fig. 4. The WIDE actuator 35 shifts in the direction of optical axis by the face cam for the WIDE lens 6, to perform focus adjustment.

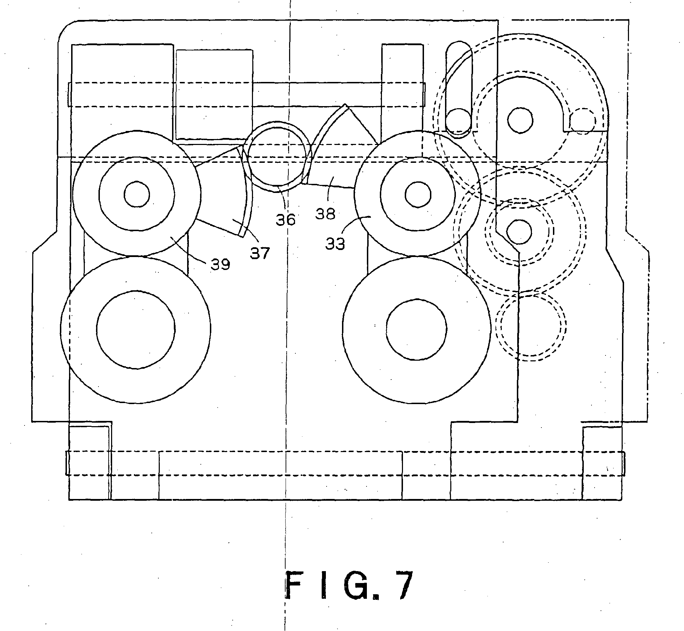

The WIDE lens 6 and the TELE lens 9 may be driven by one actuator. Fig. 7 is a plan view when the WIDE actuator and the TELE actuator 34 are integrated. The actuator in Fig. 7 rotates/drives the WIDE actuator gear 39 and the TELE actuator gear 33 via fan-shape gears 37 and 38.

In the case of Fig. 7, when either the WIDE lens 6 or the TELE lens 9 is used, both lenses shift in the direction of optical axis, but there occurs no problem in photographing. By having the structure shown in Fig. 7, the number of actuators can be reduced, thereby realizing cost reduction and miniaturization.

In this embodiment, as shown in Fig. 1, the WIDE lens holder 8 for holding the WIDE lens 6 and the TELE lens holder 11 for holding the TELE lens 9 are arranged such that the tips thereof on the subject side are substantially flush. Accordingly, the WIDE lens 6 and the TELE lens 9 do not protrude from the entire surface of the lens module, thereby obtaining a structure that can sufficiently withstand severe drop tests required for mobile phones. Further, since the lenses do not protrude from the entire surface, the design of the mobile phone and the like will not be damaged.

The mechanism of the shutter 13 will be explained next. The shutter 13 according to the embodiment has, as shown in Fig. 3, a rectangular shape, and normally arranged at a position which does not close the optical axis. The shutter 13 rotates 180 degrees immediately after the user presses a shutter button (not shown). As a result, immediately after the user presses the shutter button, the subject light incident on the imaging plane of the image sensor 3 is intercepted only once. Accordingly, noise light does not enter into the image sensor 3 immediately after imaging, thereby improving the quality of the photographed image.

More specifically, a shutter gear 40 is fitted to the shaft of the rectangular shutter 13, and an idle gear 41 engages with the shutter gear 40, and a shutter actuator gear 42 engages with the idle gear 41. The shutter actuator gear 42 is rotated by a shutter actuator 43. The shutter 13 rotates at a high speed by 180 degrees, when the user presses the shutter button (not shown). Accordingly, the subject light does not enter into the image sensor 3, while the shutter 13 passes, and hence, noise light components are not included in the imaged data of the image sensor 3.

It is necessary to make the lens module small and thin as much as possible, and hence, the layout of respective members has to be worked out well. The structure of the lens module shown in Figs. 1 to 5 is only one example, and the arrangement of members may be changed according to need. Taking effective use of the space into consideration, as shown in Figs. 1 and 2, it is desired to arrange the switching actuator 25 for shifting the lens base 2 next to the image sensor 3.

Since the lens base 2 shifts every time switching of WIDE/TELE is performed, the shift mechanism has to have excellent durability. For the example of using the guide rods 21 and 22 according to this embodiment, the durability has been proven for a zoom lens and the like.

However, when the lens base 2 is repeatedly shifted along the guide rods 21 and 22, there is the possibility that the dust from the vicinity of the guide rods 21 and 22 enters into the sensor holder 1, and adheres on the imaging plane of the image sensor 3. In this embodiment, therefore, as shown in Fig. 4, a dustproof groove 51 extending substantially parallel to the guide rods 21 and 22 is formed obliquely below the guide rods 21 and 22. The dustproof groove 51 can prevent dust and the like generated in the case where the lens base 2 shifts along the guide rods 21 and 22 from being intruded inside. Accordingly, there is no possibility that the dust and the like adhere on the imaging plane of the image sensor 3.

Thus, in this embodiment, since the WIDE lens holder 8 and the TELE lens holder 11 having a different focal length are arranged so that the tips thereof on the subject side are substantially flush, the lenses do not protrude from the housing, the lenses can withstand the drop tests, and the design will not be damaged.

Further, since the optical length is made long by changing the angle of the subject light by the first and the second mirrors 5 and 12, the thickness in the direction of optical axis can be sufficiently thin, thereby realizing a thin lens module.

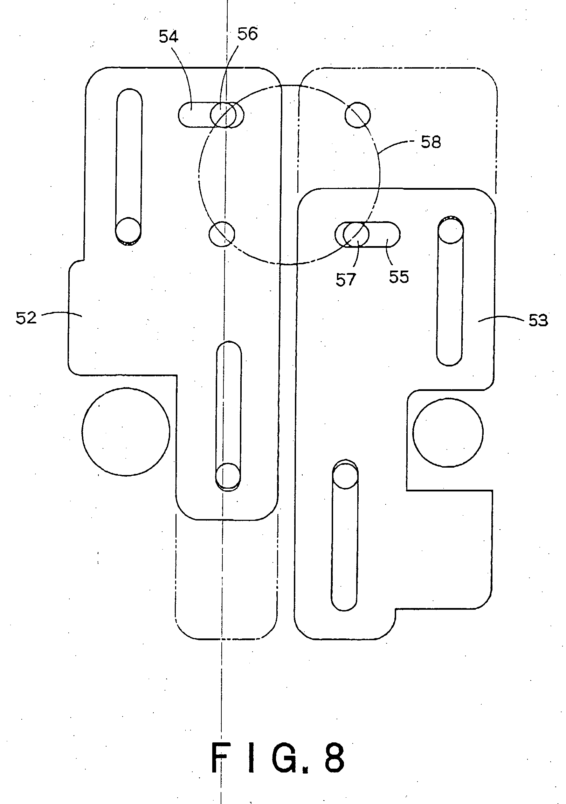

In the embodiment, an example in which the rectangular shutter 13, which rotates 180 degrees about the axis, has been explained, but the form of the shutter 13 is not particularly limited, and an individual shutter generally used in a silver salt camera and the like may be used. Fig. 8 depicts one example of an individual shutter 13'. One of two blade members 52 and 53 constituting the shunter 13' is for the WIDE lens, and the other is for the TELE lens. These blade members 52 and 53 are normally sheltered at a position where they do not cover the optical axes of the both lenses, as shown in Fig. 8. Cam grooves 54 and 55 are formed in these blade members 52 and 53, and drive pins 56 and 57 respectively engage with these cam grooves. These drive pins 56 and 57 are integrally formed on a disc 58, and the disc 58 is rotated/driven by a shutter actuator (not shown).

When the user presses the shutter button, the shutter actuator immediately rotates the disc by 60 degrees counterclockwise, and immediately thereafter, rotates the disc by 60 degrees clockwise. Accordingly, the blade members 52 and 53 cover the optical axes of the both lenses 6 and 9 only for a short time. That is, imaging by the image sensor 3 is interrupted only for a short time.

Even when the shutter 13' of another type is used as shown in Fig. 8 is used, the shutter 13' can be driven by one actuator, thereby enabling miniaturization. The various types of shutter mechanism described above can be incorporated in the lens module according to the embodiment, since the tips on the subject side of the WIDE lens 6 and the TELE lens 9 are made flush.

In the above embodiment, while an example in which the WIDE lens 6 and the TELE lens 9 are provided has been explained, a standard lens may also be provided. That is, the present invention is widely applicable when two or more lenses having a different focal length are provided.

The lens module described above can be incorporated in portable equipment such as a mobile phone with camera function and a digital camera.

Various types of portable equipment having a built-in camera are in many cases provided with a digital zoom function. However, the digital zoom has inferior image quality as compared to the optical zoom, and as the zoom magnification increases, the image quality deteriorates. Under such circumstances, the digital camera and the like use the optical zoom and the digital zoom together. However, in order to realize miniaturization, the optical zoom is approximately limited to tri-magnifications, and further zoom is performed by the digital zoom.

In the portable equipment having the lens module according to this embodiment incorporated therein, the optical zoom and the digital zoom can be used together. Since the lens module according to this embodiment has two types of lenses having a different focal length, there are two zoom amounts capable of the optical zoom. When the user sets the zoom amount other than those two, the digital zoom is used.

For example, a case where the user sets a zoom amount corresponding to the focal length of the WIDE lens 6 to gradually increase the zoom amount will be explained hereinafter. In this case, optical zoom is performed by using the WIDE lens 6, and thereafter, digital zoom is performed with respect to the data imaged by using the WIDE lens 6, up to the zoom amount corresponding to the focal length of the TELE lens 9. When reaching the zoom amount corresponding to the focal length of the TELE lens 9, digital zoom is suspended, to display the Immediately preceding imaged data, and optical zoom is performed by switching to the TELE lens 9 by the lens base 2. When the zoom amount is increased further, digital zoom is performed with respect to the data imaged by using the TELE lens 9. On the contrary, when the zoom amount is decreased gradually, the similar operation is performed.

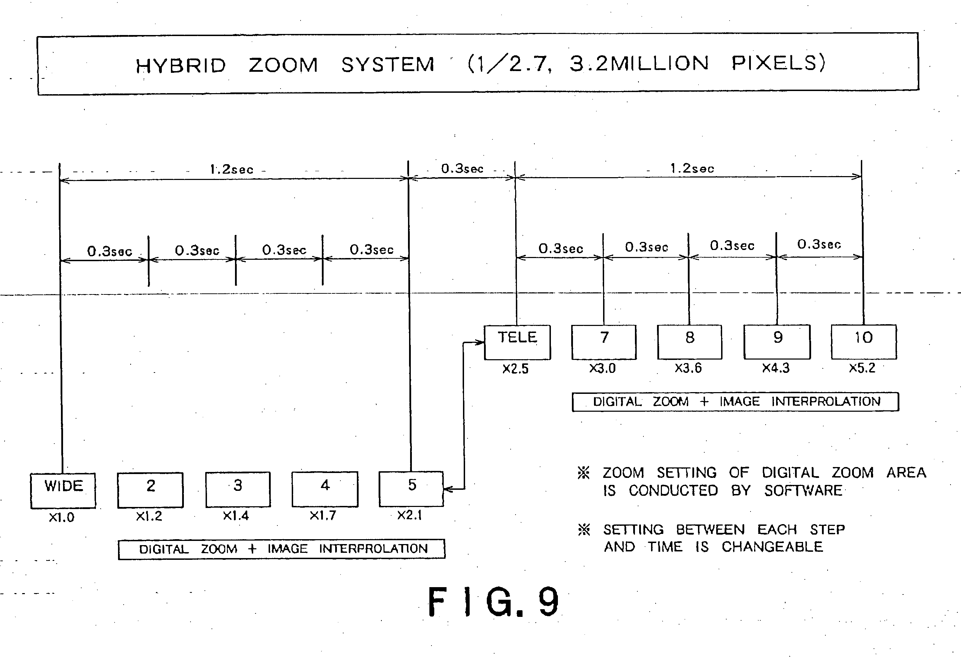

Fig. 9 is a diagram for explaining one example of switching of the zoom amount. A hybrid processor in the portable equipment performs adjustment of the zoom amount in the following procedure. That is, as shown in the figure, when the zoom amount is changed from a short focus (WIDE) side to a long focus (TELE) side, the zoom amount changes by 1.2 magnifications. More specifically, the zoom amount changes by one step (1.2 magnifications) every time the user makes a short-press on the zoom button. On the other hand, when the user makes a long-press on the zoom button, the zoom amount changes by one step at an interval of 0.3 second.

When the zoom amount is changed from the short focus side, optical zoom is performed by using the WIDE lens 6, and the fifth magnification (2.1 magnifications) in Fig. 9 becomes the maximum zoom amount by using the WIDE lens 6.

Subsequently, when the user presses the zoom button, the lens is switched to the TELE lens 9, with the screen display of the portable equipment unchanged. When switching to the TELE lens 9 has finished, the screen display is changed to the one using the TELE lens 9. At this stage, digital zoom is not performed, and a screen display by the optical zoom is conducted. The zoom amount at this stage is, as shown in Fig. 9, is 2.5 magnifications. In this state, when the user makes a long-press on the zoom button, the zoom amount changes by one step (1.2 magnifications) at an interval of 0.3 second. Finally, the maximum zoom amount becomes 5.2 magnifications.

In contrast, when the zoom amount is changed from the long focus side toward the short focus side, zoom is switched in an order opposite to that explained above, and the zoom amount changes by 1/1.2 magnifications.

Thus, even when the WIDE lens 6 and the TELE lens 9 are switched halfway, scaling of an image is performed smoothly, without interrupting the screen display.

When the lens module according to this embodiment is assembled in the portable equipment such as a camera, a hybrid zoom camera that can achieve a seamless zoom function by combining the optical zoom and the digital zoom can be realized, as in the normal digital camera.

## Claims

1. A lens module, comprising:
a plurality of lens units which have focal lengths different from each other;
an imaging device which focuses a subject light passing through one lens unit selected from said plurality of lens units on a common imaging plane to conduct photoelectric conversion; and
a lens base which houses said plurality of lens units so that tip's faces of lenses at subject side in said plurality of lens units are disposed at the same position,
wherein switching of light paths in said plurality of lens units is conducted by moving the entire lens base.

2. The lens module according to claim 1, wherein said plurality of lens units includes:
a first lens unit in which a light axis is provided only in a direction orthogonal to the imaging plane; and
a second lens unit in which light axes are provided in directions orthogonal and parallel to the imaging plane.

3. The lens module according to claim 2, further comprising a light path switching part which switches selectively the light paths of the subject light so that the subject light passing through said plurality of lens units is focused on the imaging plane,
wherein said second lens unit has a crank light axis optical system which has two mirrors for switching directions of the light axes; and
said light path switching part switches the light paths of said plurality of lens units by moving said lens base along the light path between said two mirrors.

4. The lens module according to claim 3, wherein the amount of moving said lens base is a range which is larger than length of the imaging plane in a direction of moving said lens base, and is smaller than 1.5 times as large as the length thereof.

5. The lens module according to claim 3, wherein the amount of moving said lens base is shorter than an interval of said two mirrors.

6. The lens module according to claim 3, further comprising a sensor holder which houses said imaging device and is fixed thereto,
wherein said two mirrors are disposed between the imaging plane and the lens in said second lens unit; and
one mirror in a side near the imaging plane moves with said lens base and the other mirror in a side near the lens is housed in said sensor holder.

7. The lens module according to claim 6, wherein said sensor holder has a guide rod which guides movement of said lens base; and
said lens base is suspended by said guide rod, and moves along said guide rod.

8. The lens module according to claim 6, further comprising a switching mechanism which moves said lens base along said sensor holder, said sensor holder including:
a switching actuator which transmits driving force;
a disk shape member driven directly or indirectly by said switching actuator;
a cam groove formed in a housing of said lens base; and
a driving pin which is formed in said disk shape member and engaged with said cam groove, said driving pin moving said lens base along said guide rod in accordance with rotation of said disk shape member.

9. The lens module according to claim 8, wherein said switching actuator is disposed below the mirror in a side near the imaging phase in said sensor holder.

10. The lens module according to claim 1, further comprising a shatter blade which are used for said plurality of lens units and cuts off the subject light incident on the imaging plane for a prescribed time in response to push of a shutter button; and
an actuator which operates said shutter blade.

11. A camera, comprising a lens module, said lens module including:
a plurality of lens units which have focal lengths different from each other;
an imaging device; which focuses a subject light passing through the lens unit selected from said plurality of lens units on the same imaging plane to conduct photoelectric conversion; and
a lens base which houses said plurality of lens units so that tip's faces of lenses at subject side in said plurality of lens units are disposed at the same position,
wherein switching of light paths in said plurality of lens units is conducted by moving the entire lens base.

12. The camera according to claim 11, wherein said plurality of lens units has a short focal length les unit and a long focal length lens unit,
said camera further comprising:
a zoom amount setting part which sets zoom amount;
a digital zoom processing part which zooms in and zooms out digitally the imaging data from said imaging device based on the zoom amount set by said zoom amount setting part; and
a hybrid processing part which stops the processing by said digital zoom processing part when the zoom amount set by said zoom amount setting part corresponds to the focal length of said short focal length lens unit or the focal length of said long focal length lens unit, conducts the processing by said digital zoom processing part by using said short focal length lens unit when said zoom amount setting part switches the zoom amount from short focal length side to long focal length side, until the zoom amount reaches the focal length of said long focal length lens unit, and conducts the processing by said digital zoom processing part by using said long focal length lens unit when the zoom amount exceeds the focal length of said long focal length lens unit.

13. The camera according to claim 11, wherein said plurality of lens units has a short focal length les unit and a long focal length lens unit,
said camera further comprising:
a zoom amount setting part which sets zoom amount;
a digital zoom processing part which zooms in and zooms out digitally the imaging data from said imaging device based on the zoom amount set by said zoom amount setting part; and
a display apparatus which displays image data processed by said digital zoom processing part; and
a hybrid processing part which displays on said display apparatus image data obtained by zoom adjustment conducted by said digital zoom processing part by using said short focal length lens unit until reaching a prescribed zoom amount, conducts switching to said long focal length lens unit without changing a display screen on said display apparatus, and displays on said display apparatus image data obtained by zoom adjustment conducted by said digital zoom processing part by using said long focal length lens unit in the zoom amount more than the prescribed zoom amount, when the zoom amount is continuously changed from short focal length side to long focal length side.

14. The camera according to claim 11, wherein said plurality of lens units has a short focal length les unit and a long focal length lens unit,
said camera further comprising:
a zoom amount setting part which sets zoom amount;
a digital zoom processing part which zooms in and zooms out digitally the imaging data from said imaging device based on the zoom amount set by said zoom amount setting part; and
a display apparatus which displays image data processed by said digital zoom processing part; and
a hybrid processing part which displays on said display apparatus image data obtained by zoom adjustment conducted by said digital zoom processing part by using said long focal length lens unit until reaching a prescribed zoom amount, conducts switching to said short focal length lens unit without changing a display screen on said display apparatus, and displays on said display apparatus image data obtained by zoom adjustment conducted by said digital zoom processing part by using said short focal length lens unit in zoom amount less than the prescribed zoom amount, when zoom amount is continuously changed from long focal length side to short focal length side.
